# EUROPEAN PATENT SPECIFICATION

(11) **EP 3 391 174 B1**
(45) Date of publication and mention of the grant of the patent: **17.09.2025**
(21) Application number: 16874741.8
(22) Date of filing: 02.12.2016
(51) Int. Cl.: G06K 7/00, G06F 1/16

(54) **WEARABLE APPARATUSES COMPATIBLE WITH MULTIPLE SMARTCARDS**
MIT MEHREREN SMARTCARDS KOMPATIBLE WEARABLE-VORRICHTUNGEN
APPAREILS VESTIMENTAIRES COMPATIBLES AVEC DE MULTIPLES CARTES À PUCE

(30) Priority: 15.12.2015 CN 201510939003
(43) Date of publication of application: 24.10.2018
(73) Proprietor: BOE Technology Group Co., Ltd., Beijing 100015 (CN)
(72) Inventor: ZOU, Bin, Beijing 100176 (CN); BAI, Feng, Beijing 100176 (CN); LIU, Miao, Beijing 100176 (CN); YE, Hongna, Beijing 100176 (CN); SHI, Xiaodong, Beijing 100176 (CN); YANG, Guilong, Beijing 100176 (CN); ZHAO, Haoyu, Beijing 100176 (CN)
(74) Representative: Cohausz & Florack
(86) International application number: PCT/CN2016/108358
(87) International publication number: WO 2017/101684

(56) References cited:
- CN-A- 1 804 737
- CN-A- 105 388 974
- CN-U- 204 635 293
- CN-U- 205 210 765
- US-A- 4 049 844
- US-A1- 2002 020 745
- US-A1- 2011 013 490
- US-A1- 2015 178 532
- US-B1- 6 889 059

## Description

### TECHNICAL FIELD

The present invention relates to wearable apparatuses, more particularly, to wearable apparatuses compatible with multiple smartcards and a kit having the same.
US patent application US4049844A1 discloses a method for making a circuit board involving the screen printing of a radiation curable ink onto the surface of a substrate followed by the radiation cure of the ink. A photoflash circuit board array made by such method is also provided.
US patent application US2011013490A1 discloses a smart card watch which comprises a watch head and straps. A timepiece device and a smart card device are provided in the watch head, and a card slot is provided on the side of the watch head. People can easily carry the smart card with the watch which cannot be lost easily and they can conveniently change smart cards having different functions anytime and anywhere they want.
US patent US6889059B1 discloses a multi-card cellular telephone apparatus which includes a central processing unit and a plurality of SIM cards connected to the central processing unit through slots. The plurality of SIM cards are selectively managed by the central processing unit employing an active time agenda that allows reading of an internal clock time and activating the SIM cards as a function of the assigned time range.

### BACKGROUND

Various types of wearable apparatuses have been developed in recent years. Examples of wearable apparatuses include portable apparatuses such as watches, glasses, and wristbands; and attachable apparatuses such as a patch. Wearable apparatuses have found a wide range of applications, including, e.g., fitness tracking devices, wearable medical devices, and payment transaction systems.

### SUMMARY

In one aspect, the present invention provides a wearable apparatus as defined in appended claim 1.

Preferred embodiments are defined in the appended dependent claims.

### BRIEF DESCRIPTION OF THE FIGURES

The following drawings are merely examples for illustrative purposes according to various disclosed embodiments and are not intended to limit the scope of the present invention.
FIG. 1 is a diagram illustrating the structure of a wearable apparatus in some embodiments according to the present disclosure.
FIG. 2 is a diagram illustrating the structure of an apparatus main body in some embodiments according to the present disclosure.
FIG. 3 is a diagram illustrating the structure of a motherboard in some embodiments according to the present disclosure.
FIG. 4 is a diagram illustrating the structure of a motherboard in some embodiments according to the present disclosure.
FIG. 5 is a diagram illustrating the structure of a wearable apparatus in some embodiments according to the present disclosure.
FIG. 6 is a diagram illustrating the structure of a wearable apparatus in some embodiments according to the present disclosure.
FIG. 7 is a diagram illustrating the structure of a wearable apparatus in some embodiments according to the present disclosure.

### DETAILED DESCRIPTION

The disclosure will now be described more specifically with reference to the following embodiments. It is to be noted that the following descriptions of some embodiments are presented herein for purpose of illustration and description only. It is not intended to be exhaustive or to be limited to the precise form disclosed.

In some conventional wearable apparatuses, a smartcard, e.g., a transit card or a near field communication chip, is included. A user wearing the wearable apparatus may use it to complete a transaction such as a credit card transaction or payments for commute. However, the conventional wearable payment apparatuses include only a single payment smartcard affixed in the wearable payment apparatuses. Therefore, one wearable payment apparatus can only be used for one type of payment transaction.

Accordingly, the present invention provides, *inter alia,* a wearable apparatus, defined by the appended claims, compatible with multiple smartcards and a kit having the same that substantially obviates one or more of the problems due to limitations and disadvantages of the related art. In some embodiments, the wearable apparatus includes an apparatus main body having at least one receptacle configured to detachably attaching a smartcard. Optionally, the wearable apparatus further includes a smartcard detachably attached to the at least one receptacle. Optionally, the wearable apparatus is compatible with a plurality of smartcards. As used herein, the term the term "detachably connected" refers to configurations in which an element is attached to another element while the element is detachable from the other element without damage. Optionally, the elements are joined together by means configured to allow for the separation of the components at the point of attachment. In some embodiments, the wearable apparatus is compatible with a plurality of smartcards having different pin configuration. Optionally, the wearable apparatus includes a plurality of receptacles having different pin configurations corresponding to a plurality of smartcard having different pin configurations. Optionally, the wearable apparatus includes at least one receptacle that is compatible with a plurality of smartcard having different pin configurations. Optionally, the wearable apparatus is a wearable payment apparatus including a payment smartcard. Optionally, the plurality of smartcard having different pin configurations are a plurality of payment smartcards.

FIG. 1 is a diagram illustrating the structure of a wearable apparatus in some embodiments according to the present disclosure. Referring to FIG. 1, the wearable apparatus in some embodiments includes an apparatus main body 10 and a smartcard 11. The apparatus main body 10 includes a receptacle 12 for receiving the smartcard 11, which is detachably attached to the receptacle 12. By having this design, various types of smartcards may be compatibly used with the present wearable apparatus. Examples of smartcards include, but are not limited to, transit card chip, a dual interface card, a near field communication chip, a secure digital memory card, and a subscriber identity module card. For example, a single wearable apparatus is capable of supporting various payment transaction systems. Moreover, the present wearable apparatus can be compatibly used with smartcards having various pin configurations, obviating the need for a separate apparatus for each smartcard having a different pin configuration.

FIG. 2 is a diagram illustrating the structure of an apparatus main body in some embodiments according to the present disclosure. Referring to FIG. 2, the apparatus main body 10 further includes a casing 102 and a motherboard 103 enclosed by the casing 102. As shown in FIG. 2, the receptacle 12 is disposed on the motherboard 103, the casing 102 has an aperture 101 through which a smartcard may be attached to or detached from the receptacle 12. In FIG. 2, the receptacle 12 includes a pluggable interface 120 compatible with a pluggable interface in the smartcard. The pluggable interface 120 is disposed in a position facing the aperture 101.

FIG. 3 is a diagram illustrating the structure of a motherboard in some embodiments according to the present disclosure. Referring to FIG. 3, the motherboard 103 in some embodiments includes a copper pour area A1 and a non-copper pour area A2. The copper pour area A1 includes a plurality of electrical routing metal traces, which may be formed by etching the copper pour or by forming pad window structures. The non-copper pour area A2 is outside the copper pour area A1, and is substantially free of electrical routing metal traces. The receptacle 12 and the smartcard 11 are disposed on the motherboard 103 in the non-copper pour area A2, as shown in FIG. 3. Projections of the receptacle 12 and the smartcard 11 on the motherboard 103 are outside that of the copper pour area A1. By disposing the receptacle 12 and the smartcard 11 in an area substantially free of electrical routing metal traces, the present wearable apparatus obviates shielding of smartcard signals by the metal traces.

The motherboard 103 may have one of a single layer structure or a laminated multilayer structure. Examples of motherboards include, but are not limited to, a printed circuit board and a flexible printed circuit board.

FIG. 4 is a diagram illustrating the structure of a motherboard in some embodiments according to the present disclosure. Referring to FIG. 4, the motherboard 103 in some embodiments includes a first region B1 and a second region B2. Substantially all electronic components and metal pad structures of the motherboard 103 are disposed in the first region B1, and the second region B2 is substantially free of electronic components and metal pad structures. The receptacle 12 and the smartcard 11 are disposed on the motherboard 103 in the second region B2, as shown in FIG. 4. Projections of the receptacle 12 and the smartcard 11 are outside that of the first region B1. Referring to FIGs. 3 and 4, a projection of the non-copper pour area A2 on the motherboard 103 is substantially within, or coextensive with, that of the second region B2. The copper pour area A1 and the electronic components and metal pad structures of the motherboard 103 may be disposed on a same surface of the motherboard 103. The copper pour area A1 is on a surface of the motherboard 103 opposite to the surface on which the electronic components and metal pad structures of the motherboard 103 are disposed. By disposing the receptacle 12 and the smartcard 11 in an area substantially free of electronic components and metal pad structures, the present wearable apparatus obviates shielding of smartcard signals by the electronic components and metal pad structures.

FIG. 5 is a diagram illustrating the structure of a wearable apparatus in some embodiments according to the present disclosure. Referring to FIG. 5, the wearable apparatus in some embodiments further includes a display panel 13 electrically connected to the motherboard 103 and attached to the casing. Projections of the receptacle 12 and the smartcard on the motherboard 103 are outside a projection 131 of the display panel 13 on the motherboard 103. The projection 131 of the display panel 13 on the motherboard 103 is outside that of the non-copper pour area. The projection 131 of the display panel 13 on the motherboard 103 is within that of the copper pour area or substantially coextensive with that of the copper pour area. By disposing the receptacle 12 and the smartcard 11 in an area outside that of the display panel, the present wearable apparatus obviates shielding of smartcard signals by the display panel.

Referring to FIG. 2, the wearable apparatus in some embodiments further includes an aperture cover 14 movably connected to the casing 102. The aperture cover 14 is configured to be movable between a first position at which the aperture 101 is accessible (e.g., the aperture cover 14 in an open state) and a second position at which the aperture 101 is substantially closed (e.g., the aperture cover 14 in a closed state). Optionally, the aperture cover 14 has a dimension and a shape matching with those of the aperture 101, which ensures effective enclosure of the smartcard in the apparatus main body when the aperture 101 is closed by the aperture cover 14. Optionally, the wearable apparatus further includes a seal surrounding an edge of the aperture cover 14 for protecting the aperture cover 14, e.g., buffering the opening and closing motion of to reduce impact on the aperture cover 14.

Referring to FIG. 2, the wearable apparatus in some embodiments further includes a seal 104 surrounding the aperture 101. For example, the seal 104 may be configured to form a waterproof closure of the aperture 101 when the aperture 101 is closed, e.g., by the aperture cover 14. Optionally, the seal 104 is a rubber seal.

In some embodiments, the wearable apparatus further includes an ejector configured to eject the smartcard 11. Optionally, the ejector is disposed on the receptacle 12.

FIG. 6 is a diagram illustrating the structure of a wearable apparatus in some embodiments according to the present disclosure. Referring to FIG. 6, the apparatus main body further includes a casing 102, a motherboard 103 enclosed by the casing 102, and an opener 105 configured to open the casing 102 to allow the smartcard to be attached to or detached from the receptacle 12 disposed on the motherboard 103. Examples of opener include, but are not limited to, an opening hole, a button, and a knob.

As shown in FIG. 6, the opener 105 in some embodiments is an opening hole. The wearable apparatus further includes a latching device connected to the opening hole. The latching device may be opened by a pin or a plat extending through the opening hole, thereby opening the casing 102.

In some embodiments, the apparatus main body includes at least two receptacles, each of the at least two receptacles having a different pin configuration. Optionally, the apparatus main body includes a plurality of receptacles, each of which has a pin configuration different from those of the rest of the receptacles. In some embodiments, the apparatus main body includes a receptacle that is compatible with a plurality of smartcard having different pin configurations. For example, a receptacle may have a first pin having a first pin configuration and a second pin having a second pin configuration, the first pin and the second pin disposed at different locations (e.g., different sides) of the receptacle, the first pin configuration being different from the second pin configuration.

In some embodiments, the smartcard includes a security element integrated in the smartcard. Different payment transaction systems use different security elements. In conventional apparatuses, the security element is integrated in the apparatus main body. By having the security element integrated into the smartcard rather than integrated into the apparatus main body, a single wearable apparatus can be conveniently made to be compatible with various payment transaction systems. When a user wants to use the same wearable apparatus for a different payment transaction system, the user may simply switch the smartcard in the wearable apparatus.

Various smartcards may be used in combination with the present apparatus main body. Examples of smartcards include, but are not limited to, transit card chip, a dual interface card, a near field communication chip, a secure digital memory card, and a subscriber identity module card. In one aspect, the present disclosure provides a smartcard having a security element integrated into the smartcard.

Referring to FIG. 3, the wearable apparatus in some embodiments further includes a support 15 attached to the receptacle 12 and configured to secure the smartcard 11 in the receptacle 12. Optionally, the support 15 includes a slot configured to receive the smartcard 11 and configured to have the smartcard latched in the slot. Optionally, the support 15 has a dimension matching with that of the receptacle 12. Optionally, the slot in the support 15 has a dimension matching with that of the smartcard 11. Optionally, the support 15 is detachably attached to the receptacle 12.

In some embodiments, the wearable apparatus having a receptacle may be made to be compatible with a plurality of smartcards having a same pin configuration but different dimensions. For example, such a wearable apparatus includes at least one receptacle having a first dimension and a support having a second dimension matching with the first dimension, the support includes a slot having a third dimension matching with a fourth dimension of a smartcard. When a user wants to use the same wearable apparatus for a different smartcard having a same pin configuration but different dimension, the user may choose a support including a slot having a third dimension matching with a fourth dimension of a smartcard of choice.

In one aspect, the present disclosure provides a kit having a wearable apparatus, e.g., a kit for various payment transaction systems. In some embodiments, the kit includes an apparatus main body having at least one receptacle; and a plurality of supports configured to be detachably attached to the at least one receptacle and secure a smartcard in the at least one receptacle. Each of the plurality of supports has a slot having a dimension matching with a dimension of a smartcard. The kit includes at least a first support including a first slot having a first slot dimension and a second support including a second slot having a second slot dimension, the first slot dimension being different from the second slot dimension. The first support is configured to secure a first smartcard having a first smartcard dimension matching with the first slot dimension, and the second support is configured to secure a second smartcard having a second smartcard dimension matching with the second slot dimension. The first smartcard dimension and the second smartcard dimension are different, and the first smartcard and the second smart card have a same pin configuration.

In some embodiments, the support and the aperture cover are integrated into a single structure. For example, the integral structure may include a first portion and a second portion integrated together, the first portion is a support for securing a smartcard in the receptacle, and the second portion is an endcap serving as an aperture cover configured to close the aperture. Optionally, the endcap has a dimension matching that of the aperture. By having this design, the smartcard can be placed in the support. The support and the endcap of the integral structure cooperatively attach the smartcard in the receptacle and close the aperture in one step.

In some embodiments, the wearable apparatus can be compatibly used with various different types of smartcards, as discussed above. Optionally, the present wearable apparatus allows a user conveniently switch a smartcard in the wearable apparatus to a different smartcard, e.g., a different smartcard having a same pin configuration. In some embodiments, the wearable apparatus can be compatibly used with smartcards having different security elements. Optionally, a firmware program of the wearable apparatus supports a plurality of security elements corresponding to a plurality of smartcards. Optionally, an application in a server in communication with the wearable apparatus supports a plurality of security elements corresponding to a plurality of smartcards. In some embodiments, the wearable apparatus can be compatibly used with smartcards having different operating systems. Optionally, a firmware program of the wearable apparatus supports a plurality of operating systems corresponding to a plurality of smartcards. Optionally, an application in a server in communication with the wearable apparatus supports a plurality of operating systems corresponding to a plurality of smartcards.

In some embodiments, the wearable apparatus can be compatibly used with different smartcards having different pin configurations. Optionally, a single wearable apparatus is compatible with a plurality of smartcards having different pin configurations. Optionally, a single wearable apparatus includes a plurality of receptacles, each of which is compatible with a smartcard having a different pin configuration. In one aspect, the present disclosure provides a kit including a plurality of wearable apparatuses, each of which is compatible with a smartcard having a different pin configuration.

In some embodiments, the at least one receptacle is detachably attached to the apparatus main body. FIG. 7 is a diagram illustrating the structure of a wearable apparatus in some embodiments according to the present disclosure. Referring to FIG. 7, the motherboard 103 further includes a coupler 121 for detachably attaching the receptacle 12. By having this design, the present wearable apparatus allows a user conveniently switch a receptacle in the wearable apparatus to a different receptacle, e.g., a different receptacle compatible with a smartcard having a different pin configuration.

In one aspect, the present disclosure provides a kit having a wearable apparatus, e.g., a kit for various payment transaction systems. In some embodiments, the kit includes an apparatus main body having a coupler for detachably attaching a plurality of receptacles; and a plurality of receptacles. Each of the plurality of receptacles is configured to be detachably attached to the apparatus main body, e.g., through the coupler. The kit includes at least a first receptacle compatible with a first smartcard having a first pin configuration and a second receptacle compatible with a second smartcard having a second pin configuration, the first pin configuration being different from the second pin configuration. Optionally, the plurality of receptacles may be detachably attached to the apparatus main body using a universal coupler. Optionally, the kit includes an apparatus main body; a plurality of receptacles; and a coupler for detachably attaching the plurality of receptacles.

Referring to FIG. 7, the coupler 121 in some embodiments includes at least one guide rail for detachably attaching the receptacle 12. Optionally, the coupler 121 includes a first guide rail and a second guide rail, the first guide rail is compatible with a first receptacle having a first dimension, and the second guide rail is compatible with a second receptacle having a second dimension.

In some embodiments, the coupler includes a bolt and a bolt hole cooperatively configured to secure the receptacle to the coupler. Optionally, the coupler includes a plurality of pairs of bolts and bolt holes, each pair cooperatively configured to secure the receptacle to the coupler.

In some embodiments, the casing of the wearable apparatus may be opened by the opener on the casing. Once the casing is opened, the receptacle may be conveniently attached to or detached from the apparatus main body through the coupler.

In some embodiments, the wearable apparatus further includes an antenna for receiving and transmitting smartcard signals. Optionally, the antenna is disposed in the smartcard. Optionally, the antenna is disposed in the apparatus main body, e.g., in the motherboard or the casing.

Examples of wearable apparatuses include, but are not limited to, a smart watch, an electronic ring, an electronic necklace, an electronic bracelet, an electronic badge, an electronic fitness monitoring device, a smart wristband, an electronic hat, smart glasses, a wearable apparatus that is worn on clothing, a wearable apparatus that when worn contacts human skin. In some embodiments, the wearable apparatus further includes a processor, a memory, a user interface including a display and an input device. Optionally, the wearable apparatus further includes one or more sensor. Optionally, the wearable apparatus further includes a security authentication system, e.g., a fingerprint recognition system or a voice recognition system. Optionally, the wearable apparatus further includes a power supply.

In another aspect, the present disclosure provides a kit comprising an apparatus main body as descridbed herein, e.g., a payment transaction system kit. The apparatus main body includes a motherboard and a casing. The apparatsu main body further includes one or more of a processor, a memory, a user interface including a display and an input device, one or more sensor, a security authentication system, e.g., a fingerprint recognition system or a voice recognition system, and a power supply.

In some embodiments, the kit further includes a plurality of receptacles for detachably attaching a plurality of smartcards, respectively, to the apparatus main body. Each of the plurality of smartcards is configured to be detachably attached to the apparatus main body, e.g., through the receptacle detachably attached to a coupler. The kit includes at least a first receptacle compatible with a first smartcard having a first pin configuration and a second receptacle compatible with a second smartcard having a second pin configuration. The first pin configuration is different from the second pin configuration. The first pin configuration is the same as the second pin configuration. The kit further includes one or more coupler. The coupler is affixed to the apparatus main body. The coupler is detachably attached to the apparatus main body. The coupler is a universal coupler for detachably attaching the plurality of receptacles to the apparatus main body. The kit includes a plurality of couplers configured to detachably attaching a plurality of receptacles to the apparatus main body, respectively. Each of the plurality of receptacles is configured to be detachably attached to the apparatus main body, e.g., through one of the plurality of couplers.

In some embodiments, the kit further includes a plurality of supports for detachably attaching a plurality of smartcards, respectively, to a receptacle. Each of the plurality of supports is configured to be detachably attached to a receptacle, and configured to detachably attaching a smartcard to the receptacle. Each of the plurality of supports has a slot having a dimension matching with a dimension of a smartcard. The kit includes at least a first support including a first slot having a first slot dimension and a second support including a second slot having a second slot dimension. The first slot dimension is different from the second slot dimension. The first slot dimension is the same as the second slot dimension. The first support is configured to secure a first smartcard having a first smartcard dimension matching with the first slot dimension, and the second support is configured to secure a second smartcard having a second smartcard dimension matching with the second slot dimension. The first smartcard dimension and the second smartcard dimension are different, and the first smartcard and the second smart card have a same pin configuration. The first smartcard dimension and the second smartcard dimension are different, and the first smartcard and the second smart card have different pin configurations. The kit includes a plurality of receptacles configured for detachably attaching the plurality of supports, respectively. The kit includes a universal receptacle configured for detachably attaching the plurality of supports.

In some embodiments, the kit further includes a plurality of receptacles for detachably attaching a plurality of smartcards, respectively, to the apparatus main body; and a plurality of supports for detachably attaching a plurality of smartcards, respectively, to a receptacle. Each of the plurality of smartcards is configured to be detachably attached to the apparatus main body, e.g., through the receptacle detachably attached to a coupler. Each of the plurality of supports is configured to be detachably attached to a receptacle, and configured to detachably attaching a smartcard to the receptacle. Each of the plurality of supports has a slot having a dimension matching with a dimension of a smartcard. The kit further includes one or more coupler. The coupler is affixed to the apparatus main body. The coupler is detachably attached to the apparatus main body. The coupler is a universal coupler for detachably attaching the plurality of receptacles to the apparatus main body. The kit includes a plurality of couplers configured to detachably attaching a plurality of receptacles to the apparatus main body, respectively. Each of the plurality of receptacles is configured to be detachably attached to the apparatus main body, e.g., through one of the plurality of couplers. The kit includes a plurality of receptacles configured for detachably attaching the plurality of supports, respectively. The kit includes a universal receptacle configured for detachably attaching the plurality of supports. The kit includes at least a first receptacle compatible with a first smartcard having a first pin configuration and a second receptacle compatible with a second smartcard having a second pin configuration. The first pin configuration is different from the second pin configuration. The first pin configuration is the same as the second pin configuration. The kit includes at least a first support including a first slot having a first slot dimension and a second support including a second slot having a second slot dimension. The first slot dimension is different from the second slot dimension. The first slot dimension is the same as the second slot dimension. The first support is configured to secure a first smartcard having a first smartcard dimension matching with the first slot dimension, and the second support is configured to secure a second smartcard having a second smartcard dimension matching with the second slot dimension. The first smartcard dimension and the second smartcard dimension are different, and the first smartcard and the second smart card have a same pin configuration. The first smartcard dimension and the second smartcard dimension are different, and the first smartcard and the second smart card have different pin configurations.

The kit further includes instructions on how to assemble the wearable apparatus. The kit further includes an opener for opening the casing to allow the smartcard to be attached to or detached from the apparatus main body. The kit further includes a firmware or a software. The kit further includes one or more smartcards. The one or more smartcards are smartcards having security elements therein.

In another aspect, the present disclosure provides an accessory kit for attaching a smartcard to a wearable apparatus. The accessory kit is an accessory kit for use in combination with a wearable apparatus, e.g., a payment transaction system wearable apparatus.

In some embodiments, the accessory kit includes a plurality of receptacles for detachably attaching a plurality of smartcards, respectively, to an apparatus main body of the wearable apparatus. The accessory kit includes at least a first receptacle compatible with a first smartcard having a first pin configuration and a second receptacle compatible with a second smartcard having a second pin configuration. The first pin configuration is different from the second pin configuration. The first pin configuration is the same as the second pin configuration. The accessory kit further includes one or more coupler configured to be detachably attached to the apparatus main body. The coupler is a universal coupler for detachably attaching the plurality of receptacles to the apparatus main body. The accessory kit includes a plurality of couplers configured to detachably attaching a plurality of receptacles to the apparatus main body, respectively. Each of the plurality of receptacles is configured to be detachably attached to the apparatus main body, e.g., through one of the plurality of couplers.

In some embodiments, the accessory kit further includes a plurality of supports for detachably attaching a plurality of smartcards, respectively, to a receptacle. Each of the plurality of supports is configured to be detachably attached to a receptacle, and configured to detachably attaching a smartcard to the receptacle. Each of the plurality of supports has a slot having a dimension matching with a dimension of a smartcard. The kit includes at least a first support including a first slot having a first slot dimension and a second support including a second slot having a second slot dimension. The first slot dimension is different from the second slot dimension. The first slot dimension is the same as the second slot dimension. The first support is configured to secure a first smartcard having a first smartcard dimension matching with the first slot dimension, and the second support is configured to secure a second smartcard having a second smartcard dimension matching with the second slot dimension. The first smartcard dimension and the second smartcard dimension are different, and the first smartcard and the second smart card have a same pin configuration. The first smartcard dimension and the second smartcard dimension are different, and the first smartcard and the second smart card have different pin configurations. The accessory kit includes a plurality of receptacles configured for detachably attaching the plurality of supports, respectively. The accessory kit includes a universal receptacle configured for detachably attaching the plurality of supports.

In some embodiments, the accessory kit includes a plurality of receptacles for detachably attaching a plurality of smartcards, respectively, to the apparatus main body; and a plurality of supports for detachably attaching a plurality of smartcards, respectively, to a receptacle. Each of the plurality of smartcards is configured to be detachably attached to the apparatus main body, e.g., through the receptacle detachably attached to a coupler. Each of the plurality of supports is configured to be detachably attached to a receptacle, and configured to detachably attaching a smartcard to the receptacle. Each of the plurality of supports has a slot having a dimension matching with a dimension of a smartcard. The accessory kit further includes one or more coupler. The coupler is affixed to the apparatus main body. The coupler is detachably attached to the apparatus main body. The coupler is a universal coupler for detachably attaching the plurality of receptacles to the apparatus main body. The accessory kit includes a plurality of couplers configured to detachably attaching a plurality of receptacles to the apparatus main body, respectively. Each of the plurality of receptacles is configured to be detachably attached to the apparatus main body, e.g., through one of the plurality of couplers. The accessory kit includes a plurality of receptacles configured for detachably attaching the plurality of supports, respectively. The accessory kit includes a universal receptacle configured for detachably attaching the plurality of supports. The accessory kit includes at least a first receptacle compatible with a first smartcard having a first pin configuration and a second receptacle compatible with a second smartcard having a second pin configuration. The first pin configuration is different from the second pin configuration. The first pin configuration is the same as the second pin configuration. The accessory kit includes at least a first support including a first slot having a first slot dimension and a second support including a second slot having a second slot dimension. The first slot dimension is different from the second slot dimension. The first slot dimension is the same as the second slot dimension. The first support is configured to secure a first smartcard having a first smartcard dimension matching with the first slot dimension, and the second support is configured to secure a second smartcard having a second smartcard dimension matching with the second slot dimension. The first smartcard dimension and the second smartcard dimension are different, and the first smartcard and the second smart card have a same pin configuration. The first smartcard dimension and the second smartcard dimension are different, and the first smartcard and the second smart card have different pin configurations.

The accessory kit further includes instructions on how to attach a smartcard to the wearable apparatus. The accessory kit further includes an opener for opening the casing to allow the smartcard to be attached to or detached from the apparatus main body. The accessory kit further includes a firmware or a software. The accessory kit further includes one or more smartcards. The one or more smartcards are smartcards having security elements therein.

The foregoing description of the embodiments of the invention has been presented for purposes of illustration and description.

## Claims

1. A wearable apparatus, comprising:
an apparatus main body (10) comprising a plurality of receptacles (12) for detachably attaching a plurality of smartcards (11), wherein the plurality of receptacles comprise at least a first receptacle adapted to receive a first smartcard and a second receptacle adapted to receive a second smartcard, the first receptacle has a first dimension, the second receptacle has a second dimension, and the first dimension is different from the second dimension; and
the apparatus main body (10) further comprises a casing (102); and a motherboard (103) enclosed by the casing (102); the plurality of receptacles (12) being disposed on the motherboard (103),
the motherboard (103) comprises a copper-coated area (A1) comprising a plurality of electrical routing traces and a non-copper-coated area (A2) outside the copper-coated area (A1), the non-copper-coated area (A2) is free of electrical routing metal traces, and
the plurality of receptacles (12) are disposed on the motherboard (103) in the non-copper-coated area (A2),
**characterised in that**:
the wearable apparatus further comprises a display panel (13) attached to the casing (102) and electrically connected to the motherboard (103);
a projection (131) of the display panel (13) on the motherboard (103) in a direction perpendicular to the motherboard (103) is coextensive with that of the copper-coated area (A1); and
projections of the plurality of receptacles (12) on the motherboard (103) in the direction perpendicular to the motherboard (103) are outside the projection (131) of the display panel (13) on the motherboard (103) in a direction perpendicular to the motherboard (103).

2. The wearable apparatus of claim 1, wherein the motherboard (103) further comprises a first region (B1) and a second region (B2);
all electronic components and metal pad structures of the motherboard (103) are disposed in the first region (B1);
the second region (B2) is free of electronic components and metal pad structures; and
the plurality of receptacles (12) are disposed on the motherboard (103) in the second region (B2).

3. The wearable apparatus of claim 1, wherein the casing (102) comprises an aperture (101) through which the plurality of smartcards (11) are configured to be attached to or detached from the plurality of receptacles (12); and
the wearable apparatus further comprises a seal (104) surrounding the aperture (101), the seal (104) being configured to form a waterproof closure of the aperture (101) when the aperture (101) is closed, and the seal (104) is a rubber seal.

4. The wearable apparatus of claim 1, wherein the casing (102) comprises an aperture (101) through which the plurality of smartcards (11) are configured to be attached to or detached from the plurality of receptacles (12); and
the wearable apparatus further comprises an aperture cover (14) movably connected to the casing (102); and configured to be movable between a first position at which the aperture (101) is accessible and a second position at which the aperture (101) is closed.

5. The wearable apparatus of claim 1, wherein the casing (102) comprises an aperture (101) through which the smartcard is configured to be attached to or detached from the at least one receptacle; and
the wearable apparatus further comprises an ejector configured to eject the smartcard (11).

6. The wearable apparatus of claim 1, wherein the apparatus main body (10) further comprises an opener (105) configured to open the casing (102) to allow the plurality of smartcards (11) to be attached to or detached from the plurality of receptacles (12),
and the opener (105) comprises one of an opening hole, a button, and a knob,
and the plurality of receptacles have different dimensions.

7. The wearable apparatus of claim 1, further comprising a plurality of smartcards (11) detachably attached to the plurality of receptacles (12);
wherein the smartcards (11) comprise security elements integrated in the smartcards (11),
and the smartcards (11) comprise a dual interface card, a near field communication chip, a secure digital memory card, and a subscriber identity module card.

8. The wearable apparatus of claim 1, further comprising at least one support (15) attached to the plurality of receptacles (12) and configured to detachably attaching the plurality of smartcards (11) in the plurality of receptacles (12);
wherein the at least one support (15) comprises a slot configured to receive the plurality of smartcards (11) and have the plurality of smartcards (11) latched therein.

9. The wearable apparatus of any one of claims 1 to 8, wherein the plurality of receptacles (12) are detachably attached to the apparatus main body (10).

10. The wearable apparatus of claim 9, wherein
the motherboard (103) comprises a coupler (121) for detachably attaching the plurality of receptacles (12),
and
the coupler (121) comprises a guide rail for detachably attaching the plurality of receptacle (12),or the coupler (121) comprises a bolt and a bolt hole cooperatively configured to secure the plurality of receptacles (12) to the coupler(121).

11. The wearable apparatus of claim 8, wherein the at least one support (15) comprises a plurality of supports, which being configured to be detachably attached to a plurality of receptacles (12), each of which being configured to detachably attaching a plurality of smartcards (11) in the plurality of receptacles (12);
**characterised in that**:
the plurality of supports comprise a first support comprising a first slot having a first slot dimension and a second support comprising a second slot having a second slot dimension, the first slot dimension being different from the second slot dimension.

12. The wearable apparatus of claim 11, wherein the first support is configured to secure a first smartcard having a first smartcard dimension matching with the first slot dimension to the plurality of receptacles (12); and the second support is configured to secure a second smartcard having a second smartcard dimension matching with the second slot dimension to the plurality of receptacles (12); the first smartcard dimension and the second smartcard dimension being different.

## Patentansprüche

1. Tragbare Vorrichtung, aufweisend:
einen Vorrichtungshauptkörper (10), mehrere Aufnahmen (12) zum abnehmbaren Anbringen mehrerer Smartcards (11) aufweisend, wobei die mehreren Aufnahmen mindestens eine erste Aufnahme, die ausgelegt ist, um eine erste Smartcard aufzunehmen, und eine zweite Aufnahme, die ausgelegt ist, um eine zweite Smartcard aufzunehmen, umfassen, die erste Aufnahme eine erste Abmessung aufweist, die zweite Aufnahme eine zweite Abmessung aufweist und die erste Abmessung sich von der zweiten Abmessung unterscheidet; und
der Vorrichtungshauptkörper (10) ferner ein Gehäuse (102); und eine Hauptplatine (103), die von dem Gehäuse (102) umschlossen ist, aufweist; wobei die mehreren Aufnahmen (12) auf der Hauptplatine (103) angeordnet sind,
die Hauptplatine (103) einen kupferbeschichteten Bereich (A1) aufweist, der mehrere elektrische Leiterbahnen und einen nicht kupferbeschichteten Bereich (A2) außerhalb des kupferbeschichteten Bereichs (A1) aufweist, wobei der nicht kupferbeschichtete Bereich (A2) frei von elektrischen Metallleiterbahnen ist und
die mehreren Aufnahmen (12) auf der Hauptplatine (103) in dem nicht kupferbeschichteten Bereich (A2) angeordnet sind,
**dadurch gekennzeichnet, dass**:
die tragbare Vorrichtung ferner eine Anzeigetafel (13) aufweist, die an dem Gehäuse (102) angebracht und elektrisch mit der Hauptplatine (103) verbunden ist;
eine Projektion (131) der Anzeigetafel (13) auf der Hauptplatine (103) in einer Richtung senkrecht zu der Hauptplatine (103) deckungsgleich mit derjenigen des kupferbeschichteten Bereichs (A1) ist; und
die Projektionen der mehreren Aufnahmen (12) auf der Hauptplatine (103) in einer Richtung senkrecht zu der Hauptplatine (103) sich außerhalb der Projektion (131) der Anzeigetafel (13) auf der Hauptplatine (103) in einer Richtung senkrecht zu der Hauptplatine (103) befinden.

2. Tragbare Vorrichtung nach Anspruch 1, wobei die Hauptplatine (103) ferner eine erste Region (B1) und eine zweite Region (B2) aufweist;
alle elektronischen Komponenten und Metallpad-Strukturen der Hauptplatine (103) in der ersten Region (B1) angeordnet sind;
die zweite Region (B2) frei von elektronischen Komponenten und Metallpad-Strukturen ist; und die mehreren Aufnahmen (12) auf der Hauptplatine (103) in der zweiten Region (B2) angeordnet sind.

3. Tragbare Vorrichtung nach Anspruch 1, wobei das Gehäuse (102) eine Öffnung (101) aufweist, durch die die mehreren Smartcards (11) konfiguriert sind, um an den mehreren Aufnahmen (12) angebracht oder von diesen abgenommen zu werden; und
die tragbare Vorrichtung ferner eine Dichtung (104) aufweist, die die Öffnung (101) umgibt, wobei die Dichtung (104) konfiguriert ist, um einen wasserdichten Verschluss der Öffnung (101) zu bilden, wenn die Öffnung (101) geschlossen ist, und die Dichtung (104) eine Gummidichtung ist.

4. Tragbare Vorrichtung nach Anspruch 1, wobei das Gehäuse (102) eine Öffnung (101) aufweist, durch die die mehreren Smartcards (11) konfiguriert sind, um an den mehreren Aufnahmen (12) angebracht oder von diesen abgenommen zu werden; und
die tragbare Vorrichtung ferner eine Öffnungsabdeckung (14) aufweist, die beweglich mit dem Gehäuse (102) verbunden ist; und konfiguriert ist, um zwischen einer ersten Position, in der die Öffnung (101) zugänglich ist, und einer zweiten Position, in der die Öffnung (101) geschlossen ist, beweglich zu sein.

5. Tragbare Vorrichtung nach Anspruch 1, wobei das Gehäuse (102) eine Öffnung (101) aufweist, durch die die Smartcard konfiguriert ist, um an der mindestens einen Aufnahme angebracht oder von dieser abgenommen zu werden; und
die tragbare Vorrichtung ferner einen Auswerfer aufweist, der konfiguriert ist, um die Smartcard (11) auszuwerfen.

6. Tragbare Vorrichtung nach Anspruch 1, wobei der Vorrichtungshauptkörper (10) ferner einen Öffner (105) aufweist, der konfiguriert ist, um das Gehäuse (102) zu öffnen, um ein Anbringen der mehreren Smartcards (11) an den mehreren Aufnahmen (12) oder ein Abnehmen von diesen zu erlauben,
und der Öffner (105) eines von einem Öffnungsloch, einem Knopf oder einem Drehknopf aufweist
und die mehreren Aufnahmen unterschiedliche Abmessungen aufweisen.

7. Tragbare Vorrichtung nach Anspruch 1, ferner mehrere Smartcards (11) aufweisend, die abnehmbar an den mehreren Aufnahmen (12) angebracht sind;
wobei die Smartcards (11) Sicherheitselemente aufweisen, die in den Smartcards (11) integriert sind,
und die Smartcards (11) eine Dual-Interface-Karte, einen Nahfeldkommunikationschip, eine sichere digitale Speicherkarte und eine Teilnehmeridentifikationsmodulkarte umfassen.

8. Tragbare Vorrichtung nach Anspruch 1, ferner mindestens einen Halter (15) aufweisend, der an den mehreren Aufnahmen (12) angebracht ist und konfiguriert ist, um die mehreren Smartcards (11) abnehmbar in den mehreren Aufnahmen (12) anzubringen;
wobei der mindestens eine Halter (15) einen Schlitz aufweist, der konfiguriert ist, um die mehreren Smartcards (11) aufzunehmen und die mehreren Smartcards (11) darin zu verriegeln.

9. Tragbare Vorrichtung nach einem der Ansprüche 1 bis 8, wobei die mehreren Aufnahmen (12) abnehmbar an dem Vorrichtungshauptkörper (10) angebracht sind.

10. Tragbare Vorrichtung nach Anspruch 9, wobei
die Hauptplatine (103) einen Koppler (121) zum abnehmbaren Anbringen der mehreren Aufnahmen (12) aufweist
und
der Koppler (121) eine Führungsschiene zum abnehmbaren Anbringen der mehreren Aufnahmen (12) aufweist oder der Koppler (121) einen Bolzen und ein Bolzenloch aufweist, die konfiguriert sind, um zusammenwirkend die mehreren Aufnahmen (12) an dem Koppler (121) zu sichern.

11. Tragbare Vorrichtung nach Anspruch 8, wobei der mindestens eine Halter (15) mehrere Halter umfasst, die konfiguriert sind, um abnehmbar an mehreren Aufnahmen (12) angebracht zu werden, von denen jeder konfiguriert ist, um mehrere Smartcards (11) in den mehreren Aufnahmen (12) abnehmbar anzubringen;
**dadurch gekennzeichnet, dass**
die mehreren Halter einen ersten Halter mit einem ersten Schlitz, der eine erste Schlitzabmessung aufweist, und einen zweiten Halter mit einem zweiten Schlitz, der eine zweite Schlitzabmessung hat, umfassen, wobei die erste Schlitzabmessung sich von der zweiten Schlitzabmessung unterscheidet.

12. Tragbare Vorrichtung nach Anspruch 11, wobei der erste Träger konfiguriert ist, um eine erste Smartcard mit einer ersten Smartcard-Abmessung, die mit der ersten Schlitzabmessung übereinstimmt, an den mehreren Aufnahmen (12) zu sichern; und der zweite Träger konfiguriert ist, um eine zweite Smartcard mit einer zweiten Smartcard-Abmessung, die mit der zweiten Schlitzabmessung übereinstimmt, an den mehreren Aufnahmen (12) zu sichern; wobei die erste Smartcard-Abmessung und die zweite Smartcard-Abmessung unterschiedlich sind.

## Revendications

1. Appareil portable, comportant :
un corps principal d'appareil (10) comportant une pluralité de logements (12) pour fixer une pluralité de cartes à puce (11) de manière détachable, dans lequel les logements de la pluralité de logements comportent au moins un premier logement adapté pour recevoir une première carte à puce et un deuxième logement adapté pour recevoir une deuxième carte à puce, le premier logement a une première dimension, le deuxième logement a une deuxième dimension, et la première dimension est différente de la deuxième dimension, et
le corps principal d'appareil (10) comporte en outre un boîtier (102), et une carte mère (103) entourée par le boîtier (102), la pluralité de logements (12) étant disposée sur la carte mère (103),
la carte mère (103) comporte une zone revêtue de cuivre (A1) comportant une pluralité de pistes de routage électrique et une zone non revêtue de cuivre (A2) à l'extérieur de la zone revêtue de cuivre (A1), la zone non revêtue de cuivre (A2) étant exempte de pistes métalliques de routage électrique, et
les logements de la pluralité de logements (12) sont disposés sur la carte mère (103) dans la zone non revêtue de cuivre (A2),
**caractérisé en ce que** :
l'appareil portable comporte en outre un panneau d'affichage (13) fixé au boîtier (102) et électriquement connecté à la carte mère (103),
une saillie (131) du panneau d'affichage (13) sur la carte mère (103) dans une direction perpendiculaire à la carte mère (103) s'étend conjointement avec celle de la zone revêtue de cuivre (A1), et
des saillies de la pluralité de logements (12) sur la carte mère (103) dans la direction perpendiculaire à la carte mère (103) sont à l'extérieur de la saillie (131) du panneau d'affichage (13) sur la carte mère (103) dans une direction perpendiculaire à la carte mère (103).

2. Appareil portable selon la revendication 1, dans lequel la carte mère (103) comporte en outre une première zone (B1) et une deuxième zone (B2),
tous les composants électroniques et les structures de pastilles métalliques de la carte mère (103) sont disposés dans la première zone (B1),
la deuxième zone (B2) est exempte de composants électroniques et de structures de pastilles métalliques, et
les logements de la pluralité de logements (12) sont disposés sur la carte mère (103) dans la deuxième zone (B2).

3. Appareil portable selon la revendication 1, dans lequel le boîtier (102) comporte une ouverture (101) à travers laquelle les cartes de la pluralité de cartes à puce (11) sont configurées pour être fixées à la pluralité de logements (12) ou être détachées de celle-ci, et
l'appareil portable comporte en outre un joint (104) entourant l'ouverture (101), le joint (104) étant configuré pour former une fermeture étanche à l'eau de l'ouverture (101) lorsque l'ouverture (101) est fermée, et le joint (104) est un joint en caoutchouc.

4. Appareil portable selon la revendication 1, dans lequel le boîtier (102) comporte une ouverture (101) à travers laquelle les cartes de la pluralité de cartes à puce (11) sont configurées pour être fixées à la pluralité de logements (12) ou être détachées de celle-ci, et
l'appareil portable comporte en outre un couvercle d'ouverture (14) relié au boîtier (102) de manière mobile et configuré pour être mobile entre une première position dans laquelle l'ouverture (101) est accessible et une deuxième position dans laquelle l'ouverture (101) est fermée.

5. Appareil portable selon la revendication 1, dans lequel le boîtier (102) comporte une ouverture (101) à travers laquelle la carte à puce est configurée pour être fixée à l'au moins un logement et être détachée de celui-ci, et
l'appareil portable comporte en outre un éjecteur configuré pour éjecter la carte à puce (11).

6. Appareil portable selon la revendication 1, dans lequel le corps principal d'appareil (10) comporte en outre un élément d'ouverture (105) configuré pour ouvrir le boîtier (102) pour permettre de fixer la pluralité de cartes à puce (11) dans la pluralité de logements (12) ou de les détacher de celle-ci,
et l'élément d'ouverture (105) comporte un élément parmi un trou d'ouverture, une touche et un bouton,
et les logements de la pluralité de logements ont différentes dimensions.

7. Appareil portable selon la revendication 1, comportant en outre une pluralité de cartes à puce (11) fixées à la pluralité de logements (12) de manière détachable,
dans lequel les cartes à puce (11) comportent des éléments de sécurité intégrés dans les cartes à puce (11),
et les cartes à puce (11) comportent une carte à double interface, une puce de communication en champ proche, une carte mémoire numérique sécurisée (SD) et une carte de module d'identité d'abonné (SIM).

8. Appareil portable selon la revendication 1, comportant en outre au moins un support (15) fixé à la pluralité de logements (12) et configuré pour fixer la pluralité de cartes à puce (11) de manière détachable dans la pluralité de logements (12),
dans lequel l'au moins un support (15) comporte une fente configurée pour recevoir la pluralité de cartes à puce (11) et avoir la pluralité de cartes à puce (11) enclenchées dans celle-ci.

9. Appareil portable selon l'une quelconque des revendications 1 à 8, dans lequel les logements de la pluralité de logements (12) sont fixés au corps principal d'appareil (10) de manière détachable.

10. Appareil portable selon la revendication 9, dans lequel
la carte mère (103) comporte un coupleur (121) pour fixer la pluralité de logements (12) de manière détachable, et
le coupleur (121) comporte un rail de guidage pour fixer la pluralité de logements (12) de manière détachable, ou le coupleur (121) comporte un boulon et un trou de boulon configurés de manière coopérative pour fixer la pluralité de logements (12) au coupleur (121).

11. Appareil portable selon la revendication 8, dans lequel le au moins un support (15) comporte une pluralité de supports, qui sont configurés pour être fixés à une pluralité de logements (12) de manière détachable, dont chacun est configuré pour fixer une pluralité de cartes à puce (11) de manière détachable dans la pluralité de logements (12), **caractérisé en ce que** :
les supports de la pluralité de supports comportent un premier support comportant une première fente ayant une première dimension de fente et un deuxième support comportant une deuxième fente ayant une deuxième dimension de fente, la première dimension de fente étant différente de la deuxième dimension de fente.

12. Appareil portable selon la revendication 11, dans lequel le premier support est configuré pour fixer une première carte à puce ayant une première dimension de carte à puce correspondant à la première dimension de fente dans la pluralité de logements (12), et le deuxième support est configuré pour fixer une deuxième carte à puce ayant une deuxième dimension de carte à puce correspondant à la deuxième dimension de fente dans la pluralité de logements (12), la première dimension de carte à puce et la deuxième dimension de carte à puce étant différentes.
